# EUROPEAN PATENT SPECIFICATION

(11) **EP 2 439 686 B1**
(45) Date of publication and mention of the grant of the patent: **18.09.2019**
(21) Application number: 10178908.9
(22) Date of filing: 23.09.2010
(51) Int. Cl.: G06Q 10/06, G06Q 10/02

(54) **Radio frequency identification (RFID) system providing meeting room reservation and scheduling features and related methods**
RFID-System mit Konferenzraumreservierungs- und Planungsfunktionen und zugehörige Verfahren
Système d'identification de fréquences radio (RFID) fournissant des fonctions de réservation et de programmation de salles de réunion et procédés apparentés

(43) Date of publication of application: 11.04.2012
(73) Proprietor: BlackBerry Limited, Waterloo, ON N2K 0A7 (CA)
(72) Inventor: Walker, David Ryan, Waterloo Ontario N2L 3W8 (CA); Rose, Scott Douglas, Waterloo Ontario N2L 3W8 (CA); Moosavi Vahid, Waterloo Ontario N2L 3W8 (CA); Griffin Jason Tyler, Waterloo Ontario N2L 3W8 (CA); Fyke, Steven Henry, Waterloo Ontario N2L 3W8 (CA)
(74) Representative: Roberts, Gwilym Vaughan

(56) References cited:
- EP-A1- 1 862 957
- US-A1- 2006 015 376
- US-A1- 2008 162 198
- "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP002456252,

## Description

### Technical Field

This application relates to the field of communications, and more particularly, to radio frequency identification (RFID) system and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

With NFC technology becoming more widely adopted, it is now used with portable wireless communications devices in association with other short-range wireless communications, such as a wireless BlueTooth connection. For example, an NFC connection is often used to establish a wireless BlueTooth connection in which data for establishing the BlueTooth connection is initially communicated.

US2008/0162198A1 describes a method and system for conference room scheduling. The method includes detecting a user in a first location, obtaining reservation information associated with the first location, determining based on the reservation information whether the first location is reserved and notifying the user whether the first location is reserved.

### Summary

Aspects of the present invention are defined in the accompanying independent claims.

### Brief Description of the Drawings

FIG. 1 is a schematic block diagram of a meeting room reservation system in accordance with an example embodiment.
FIG. 2 is a schematic block diagram of an alternative embodiment of the meeting room reservation system of FIG. 1.
FIG. 3 is a schematic block diagram illustrating an example embodiment of the reservation server of the system of FIG. 1 in greater detail.
FIGS. 4 is a flow diagram illustrating method aspects associated with the systems of FIGS. 1 and 2.
FIG. 5. Is another flow diagram illustrating further method aspects associated with the systems of FIGS. 1 and 2.
FIG. 6 is a schematic block diagram illustrating example components of a mobile wireless communications device that may be used with the systems of FIGS. 1 and 2.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a meeting room reservation system is provided which may include at least one radio frequency identification (RFID) sensor to be positioned adjacent a meeting room, and a plurality of mobile wireless communications devices, each configured for RFID communication with the at least one RFID sensor. The system may further include a reservation server configured to schedule reserved starting and ending times for the meeting room, track checked-in mobile wireless communications devices based upon RFID communication with the at least one RFID sensor, and send at least one reservation expiration notification based upon a reserved ending time and a subsequent check-in of another mobile wireless communications device having a subsequent reserved starting time. Accordingly, the system advantageously allows reminder messages to be discretely sent to mobile wireless communications devices of occupants currently in a meeting room without the need for interruption or confrontation by those waiting to enter the meeting room for a subsequent meeting.

More particularly, the reservation server may be configured to send the at least one reservation expiration notification within a threshold period of the reserved ending time. The reservation server may also be configured to send a plurality of reservation expiration notifications at an increasing frequency. Also, the reservation server may be configured to schedule the reserved starting and ending times via RFID communication between the mobile wireless communications devices and the at least one RFID sensor. Additionally, the reservation server may be further configured to cancel reserved starting and ending times based upon a failure of at least one mobile wireless communications device to check in.

The meeting room reservation system may further include a terminal to be positioned in the meeting room. As such, the reservation server may be further configured to send the at least one reservation expiration notification to the terminal. By way of example, the terminal may comprise a display, and the display may be configured to display the at least on reservation expiration notification. In addition, the terminal and the reservation sever may communicate via a local area network (LAN). The at least one RFID sensor may comprise at least one NFC sensor, for example. In addition, the at least one reservation expiration notification may comprise at least one electronic mail (email) notification. In addition, the reservation server may further be configured to send an availability notification to the other mobile wireless communications device based upon checkout of the checked-in mobile wireless communications device.

A related resource reservation system may include at least one RFID sensor to be positioned adjacent the resource, a plurality of mobile wireless communications devices, each configured for RFID communication with the at least one RFID sensor, and a reservation server. The reservation server may be configured to schedule reserved starting and ending times for the resource, track checked-in mobile wireless communications devices based upon RFID communication with the at least one RFID sensor, and send at least one reservation expiration notification based upon a reserved ending time and a subsequent check-in of another mobile wireless communications device.

A reservation server is also provided for use with at least one RFID sensor to be positioned adjacent a meeting room and a plurality of mobile wireless communications devices each configured for RFID communication with the at least one RFID sensor. The reservation server may include a scheduling module configured to schedule reserved starting and ending times for the meeting room, and a check-in module configured to track checked-in mobile wireless communications devices based upon RFID communication with the at least one RFID sensor. The scheduling module may be further configured to send at least one reservation expiration notification based upon a reserved ending time and a subsequent check-in of another mobile wireless communications device.

A meeting room reservation method may include scheduling reserved starting and ending times for a meeting room with a reservation server, and tracking checked-in mobile wireless communications devices with the reservation server based upon radio frequency identification (RFID) communication between the mobile wireless communications devices and at least one RFID sensor positioned adjacent the meeting room. The method may also include sending at least one reservation expiration notification based upon a reserved ending time and a subsequent check-in of another mobile wireless communications device.

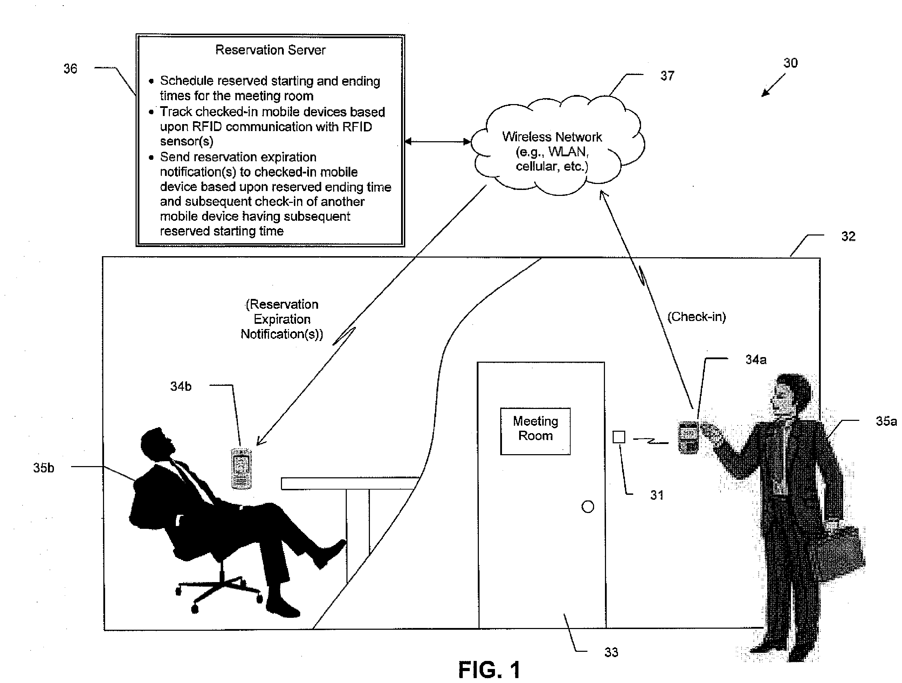

Referring initially to FIG. 1, a meeting room reservation system **30** in accordance with one example aspect is first described. Generally speaking, scheduling and sharing of meeting rooms may be a source of frustration. For example, one potential problem associated with shared conference rooms may include walking into the wrong meeting and causing an interruption (or embarrassment). Another potential problem is that some users may overrun their allotted time, so that subsequent users have to stand at the door and wait or interrupt and potentially cause a confrontation. Still another potential problem is that users may show up late for their scheduled meeting, which may cause a confrontation with others who began using the room thinking that the prior meeting was cancelled, for example. The system **30** may advantageously help alleviate such problems.

More particularly, the system **30** illustratively includes one or more radio frequency identification (RFID) sensors **31** to be positioned adjacent a meeting room **32.** In the illustrated example, the RFID sensor **31** is positioned next to a door **33** of the meeting room **32,** although it may be positioned on the door or elsewhere. The system **30** further illustratively includes a plurality of mobile wireless communications devices **34a, 34b** (also referred to as "mobile devices" herein), which are associated with respective users **35a, 35b.** In the present example, the mobile device **34b** is associated with a meeting currently in progress, while the mobile device **34a** is associated with a subsequently scheduled meeting.

The mobile devices **34a, 34b** are configured for RFID communication with the RFID sensor **31.** For example, the RFID sensor **31** may be a near field communication (NFC) sensor, and the mobile devices **34a, 34b** may communicate with the NFC sensor via NFC communications. NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The mobile devices **34a, 34b** may further include additional wireless capabilities beyond RFID or NFC in some embodiments, such as cellular, wireless LAN (e.g., BlueTooth, 802.11x, etc.), WiMAX, etc. Example mobile devices may include portable or personal media players (e.g., MP3 players, video players, etc.), portable gaming devices, portable or mobile telephones, smart phones, etc.

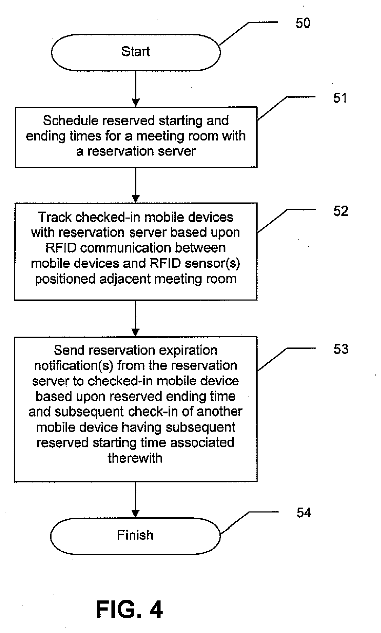

Referring additionally to FIG. 4, beginning at Block **50,** the system **30** further illustratively includes a reservation server **36** configured to schedule reserved starting and ending times for the meeting room **32,** at Block **51.** For example, one way in which rooms may be scheduled is to log onto the reservation server **36** via a LAN, Internet, etc., such as through a computer using a graphical interface (e.g., Web browser, etc.) which interfaces with a database application on the reservation server that is configured to store and retrieve meeting reservation information (e.g., room identification (ID), start times, ending times, etc.). One example application which may be configured on the reservation server **36** to perform the meeting reservation functions described herein is Microsoft® Exchange Server, although other suitable applications may also be used in different embodiments.

The reservation server **36** may also schedule starting and ending times based upon RFID communication between respective mobile devices **34a, 34b** and the RFID sensor **31.** That is, upon scanning the RFID sensor **31,** a reservation application running on a given mobile device **34** may communicate an ID of the RFID sensor **31** to the reservation server **36** via the wireless network **37.** The reservation server **36** may then cooperate with the reservation application to determine and reserve available starting and ending times for a meeting in the meeting room **32,** and associate the given mobile device **34** with the reservation in the database. The reservation server **36** may schedule multiple meeting rooms in some embodiments, and the ID of the RFID sensor **31** associated with a given meeting room may therefore be used by the reservation server to identify the given meeting room from among the other rooms.

When the reserved starting time for a meeting arrives, the given mobile device **34** is scanned or swiped with, or otherwise brought in range of, the RFID sensor **31** to "check-in" for the meeting. That is, upon swiping of a given mobile device **34,** the reservation application communicates with the reservation server **36** via the wireless network **37,** so the reservation server may track that the given mobile device **34** is checked-in for the reserved start time, at Block **52.** In the illustrated example, the mobile device **34b** has previously been checked in for a meeting currently in progress, while the mobile device **34a** is being checked in for a subsequently scheduled meeting.

To help address the above-described problems associated with shared meeting rooms, the reservation server **36** may also advantageously send one or more reservation expiration notifications to the checked-in mobile device **34b** based upon its reserved ending time and a subsequent check-in of the mobile device **34a** having a subsequent reserved starting time, at Block **53,** which concludes the method illustrated in FIG. 4 (Block **54**), although this process would typically repeat in an actual implementation. Accordingly, the system **30** advantageously allows reminder messages to be discreetly sent to the mobile device **34b** or user message account without the need for interruption or confrontation by the user **35a** who is waiting to enter the meeting room **32.**

By way of example, the reservation expiration notifications may take the form of electronic messages, such as electronic mail (email), SMS, MMS, etc., which are sent to the mobile device **34b** or user message account via the wireless network **37.** Other forms of reservation expiration notifications may also be used, such as audible alerts (e.g., an alarm sound, spoken reminder, etc.), a vibration alert (i.e., the notification causes the mobile device **34b** to vibrate), or simply a visual indication (e.g., reminder message, countdown clock, etc.) that appears on a display of the mobile device.

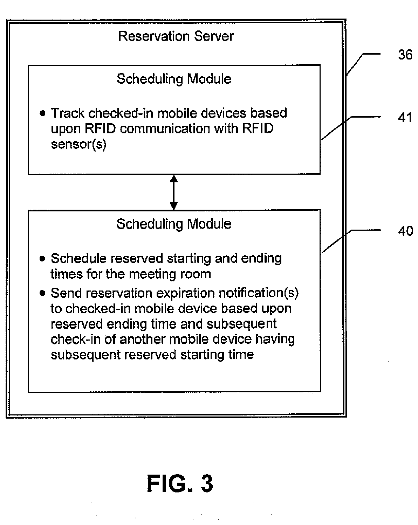

In the example embodiment illustrated in FIG. 3, the reservation server **36** illustratively includes a scheduling module **40** configured to schedule reserved starting and ending times and send reservation expiration notifications, as well as a check-in module **41** configured to track checked-in mobile devices **34,** as discussed further above. The scheduling module **40** and check-in module **41** may be implemented using hardware (e.g., processor, memory, etc.) and/or software (i.e., computer-executable instructions embodied in a physical, tangible, non-transitory medium) components, for example. Other module configurations are also possible in different embodiments.

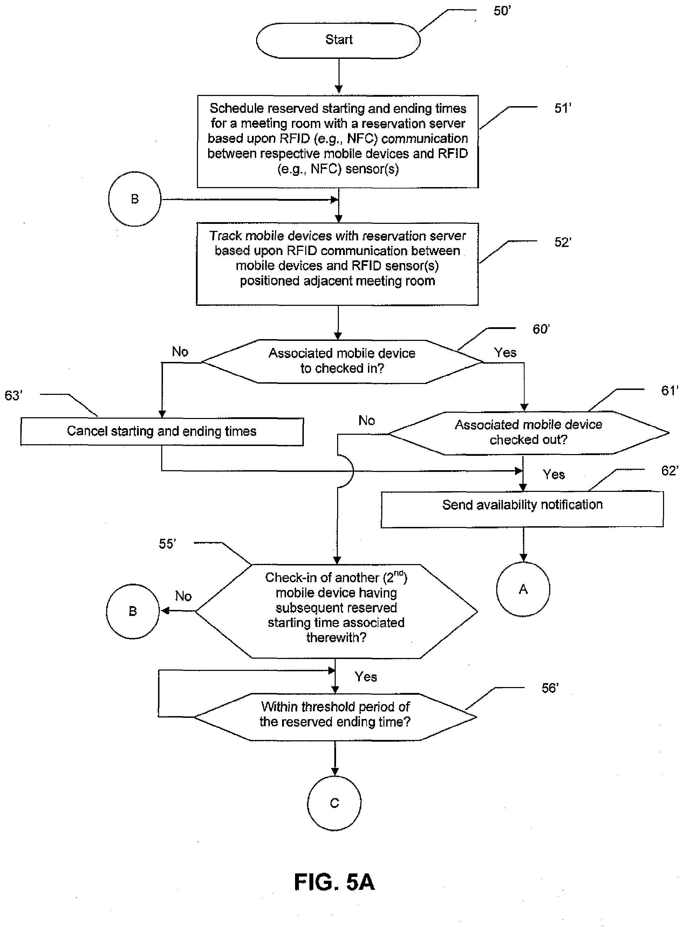

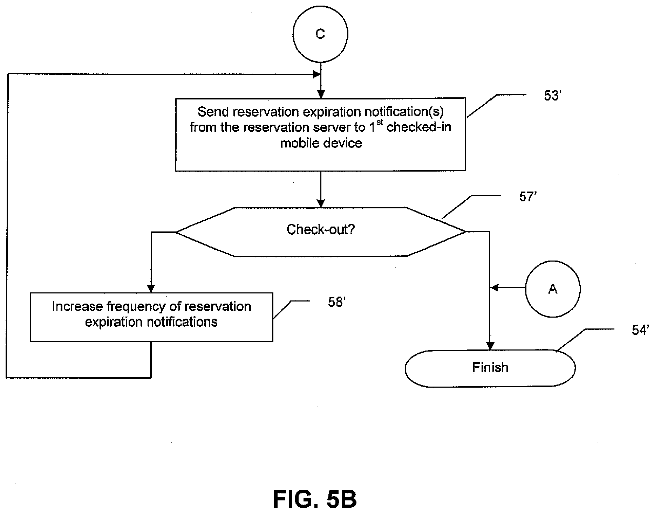

Referring additionally to FIG. 5, the reservation server **36** may be further configured to send the reservation expiration notification (or begin sending a series of notifications) within a threshold period of the reserved ending time, at Block **56'.** That is, if the second mobile device **34a** associated with the upcoming or subsequent meeting has checked in (Block **55'**), and the current time is within a threshold period of the reserved starting time for the upcoming meeting (e.g., ten or fewer minutes before the starting time), then sending of the reservation expiration notification(s) may begin (Block **53'**). Other threshold periods may also be used in different embodiments. In this way, if the mobile device **34a** is checked-in well before the reserved starting time for its associated meeting (e.g., thirty minutes prior to its reserved meeting time), the mobile device **34b** will not begin to receive the reservation expiration notification(s) until a reasonable threshold period before its associated reserved ending time (e.g., ten minutes before).

The reservation server **36** may also be configured to send a plurality of reservation expiration notifications at an increasing frequency, for example, if the mobile device **34b** does not check out of the meeting room **32** by scanning or swiping the RFID sensor **31,** such as upon exiting the meeting room, at Blocks **57'-58'.** So, for example, the reservation server **36** may send reservation expiration notifications at ten minutes, five minutes, two minutes, one minute, and thirty seconds prior to the reserved ending time, and then at the ending time and continuing thereafter until the mobile device **34b** is checked out of the meeting room **32** via the RFID sensor **31.** Other frequencies or schedules for sending multiple reservation expiration notifications may also be used in different embodiments.

Additionally, the reservation server **36** may be further configured to cancel reserved starting and ending times based upon a failure of an associated mobile device **34** to check in (Block **52'**). Thus, for example, if the reserved starting and ending times associated with the mobile device **34b** were 10:00 AM and 11:00 AM, respectively, if this mobile device had not been checked in by 10:30 AM, for example, then the reservation server **36** may advantageously cancel the reservation (i.e., cancel the reserved 10:00 AM and 11:00 AM starting and ending times, respectively). Other periods of time may be used for determining the cancellation point besides half-hour increments. Another option is to send a message to the mobile device **34** or user message account that failed to check-in requesting confirmation to cancel the reservation prior to canceling the reservation.

Similarly, if the mobile device **34b** has checked in (Block **60'**) but then checks out from the meeting room **32** prior to the scheduled ending time (i.e., indicating that the scheduled meeting finished early), at Block **61',** then the mobile device **34a** or user message account may be notified accordingly that the meeting room is available, at Block **62',** even prior to checking in at the RFID sensor **31** (Block **55'**). This feature may advantageously be used to alert the next occupant that the meeting room **32** is available prior to the scheduled start time (which may allow for setup prior to the next meeting, etc.). The reservation server **36** may also free up the remainder of the time slot in the event that a subsequent meeting is not already scheduled. Of course, if the mobile device **34b** fails to check in for its scheduled meeting, then the scheduled starting and ending times for its associated reservation may be cancelled, at Block **63',** and the mobile device **34a** or user message account may again be notified accordingly that the meeting room **32** is available early (Block **62'**).

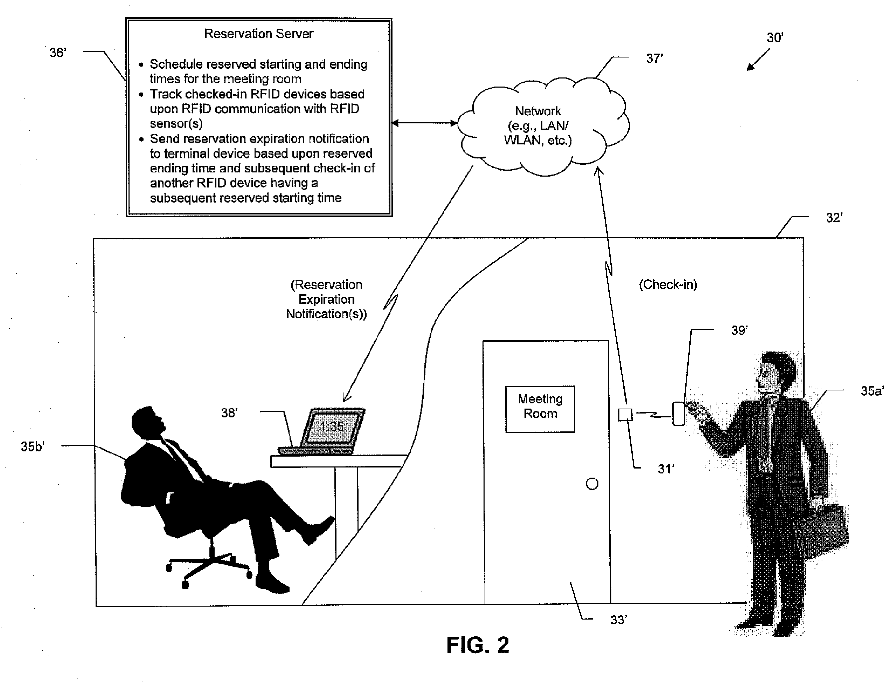

Another example meeting room reservation system **30'** is now discussed with reference to FIG. 2. In this embodiment, a terminal **38'** is positioned in the meeting room **32',** and RFID devices **39'** are associated with respective users **35'** and are each configured for RFID communication with the RFID sensor **31'.** As such, the reservation server **36'** may be configured to track checked-in RFID devices **39'** based upon RFID communication with the RFID sensor **31',** and send reservation expiration notifications to the terminal **38'** as similarly discussed above. That is, in the present example the reservation expiration notification(s) may advantageously be provided to the terminal **38',** which remains in the meeting room **32'.** In the illustrated example, the terminal **38'** (here a laptop computer) includes a display, and the reservation expiration notification takes the form of a countdown clock shown on the display which indicates how much time is left before the reserved ending time for the meeting (one minute, thirty-five seconds in the example).

While the RFID device **39'** may also include cellular, WLAN, etc., capabilities in some embodiments, the RFID device may simply take the form of a substrate (e.g., key card) with an embedded RFID (e.g., NFC) circuit, for example. In such case, the RFID sensor **31'** may communicate with the reservation server **36'** via a wired or wireless LAN, cellular communications link, etc., so that the reservation server may perform the above described functions. Various forms of terminals **38'** may be used, such as an audio terminal (e.g., a speakerphone located in the meeting room **32',** etc.), monitors or projectors, etc. It should be noted that while the systems **30** and **30'** are shown separately for clarity of illustration, the various components thereof may be used together in some applications. For example, both mobile devices **34** and RFID devices **39'** (e.g., RFID key cards) may both be used in some embodiments, and reservation expiration notifications may be sent to mobile devices **34** as well as the terminal **38'** in the meeting room **32',** if desired.

Various scheduling and conflict resolution features of the above described systems and methods will be further understood with reference to example use cases thereof. If the functions of the reservation server are implemented using Microsoft® Exchange Server, the RFID sensor **31** provides an ID of the given meeting room which is sent to the Exchange server (either directly via a LAN, etc., or through the mobile device **34a**). If the mobile device **34a** (or RFID device **39'**) is booked into the meeting room **32,** or will be in the next ten minutes, the reservation server **36** may assume that the meeting room is still occupied from the previous meeting (i.e., the meeting currently in progress) and send a reservation expiration notice to the mobile device **34b,** terminal **38',** etc., indicating that the next meeting attendees are waiting outside the door **33.** Multiple taps or swipes of the mobile device **34a** or RFID device **39'** in some embodiments may cause the reservation server **36** to make the notifications to the organizer more exaggerated (e.g., bold lettering, flashing text, louder volume, increased frequency, etc.).

If the mobile device **34a** or RFID device **39'** has not booked (i.e., has not reserved) the meeting room **32** for the upcoming meeting period, the reservation server **36** may be configured to respond with the schedule for the day and, if the meeting room is free at that moment (or in the near future), ask if a reservation is desired at the available free time(s). Alternatively, if the mobile device **34a** or RFID device **39'** is associated with an upcoming reservation, but has swiped the RFID sensor **31** for the wrong meeting room, then the reservation server **36** may indicate to the mobile device, or to a terminal located outside the meeting room, etc., that the reservation associated therewith is for a different room and optionally provide directions on how to get to the correct meeting room.

Example notifications that may be provided upon checking in with the RFID sensor **31** may include, for example, that the meeting room **32** is not reserved and is available (i.e., unoccupied). Another example is that the meeting room is not reserved but occupied (an option may be provided to notify the users within the meeting room that it is time to leave). Still another example is that the meeting room is booked, but not occupied (an option may be provided to inquire of the user holding the reservation if that reservation may be cancelled, as noted above). Yet another example is that the meeting room is reserved and occupied. In the latter example meeting room state, the above-noted reservation expiration notification process may begin at the appropriate point prior to the reserved ending time if a reservation for a subsequent meeting exists, or the available schedule may be provided with an option to make a later reservation, as noted above.

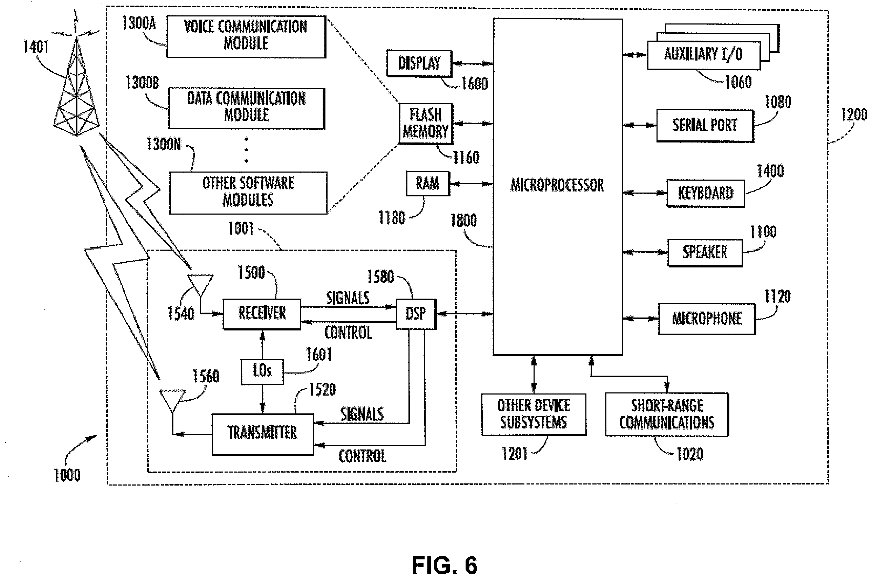

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, NFC or a BlueTooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A meeting room reservation system (30) comprising:
at least one radio frequency identification, RFID, sensor (31) to be positioned adjacent a meeting room (32), wherein said at least one RFID sensor (31) comprises at least one NFC sensor;
a plurality of mobile wireless communications devices (34a, 34b), each configured for NFC communication with said at least one NFC sensor; and
a reservation server (36) configured to
schedule reserved starting and ending times for the meeting room,
track checked-in mobile wireless communications devices (34b) based upon NFC communication with said at least one NFC sensor resulting from said mobile wireless communications devices (34b) being swiped, bumped or otherwise moved in close proximity to said at least one NFC sensor, and
send at least one reservation expiration notification to checked-in mobile wireless communications devices (34b) based upon a reserved ending time and a subsequent check-in of another mobile wireless communications device (34a) resulting from said another mobile wireless communications device (34a) being swiped, bumped or otherwise moved in close proximity to said at least one NFC sensor.

2. The meeting room reservation system (30) of claim 1 wherein said reservation server (36) is configured to send the at least one reservation expiration notification within a threshold period of the reserved ending time.

3. The meeting room reservation system (30) of claim 1 wherein said reservation server (36) is configured to send a plurality of reservation expiration notifications at an increasing frequency.

4. The meeting room reservation system (30) of claim 1 wherein said reservation server (36) is configured to schedule the reserved starting and ending times via NFC communication between said mobile wireless communications devices (34a, 34b) and said at least one NFC sensor (31).

5. The meeting room reservation system (30) of claim 1 wherein said reservation server (36) is further configured to cancel reserved starting and ending times based upon a failure of at least one associated mobile wireless communications device (34a, 34b) to check in for reserved starting times.

6. The meeting room reservation system (30) of claim 1 wherein said reservation server (36) is further configured to send an availability notification based upon checkout of the checked-in mobile wireless communications device (34b).

7. The meeting room reservation system (30') of claim 1 further comprising a terminal (38') to be positioned in the meeting room (32'); and wherein said reservation server (36') is further configured to send the at least one reservation expiration notification to said terminal.

8. The meeting room reservation system (30') of claim 7 wherein said terminal (38') comprises a display, and wherein said display is configured to display the at least one reservation expiration notification.

9. The meeting room reservation system (30') of claim 7 wherein said terminal (38') and said reservation sever (36') communicate via a local area network LAN (37').

10. A meeting room reservation method comprising:
scheduling reserved starting and ending times for a meeting room (32) with a reservation server (36);
tracking checked-in mobile wireless communications devices (34b) with the reservation server based upon near field communication (NFC) between the mobile wireless communications devices and at least one NFC sensor (31) positioned adjacent the meeting room, said communication resulting from said mobile wireless communications devices (34b) being swiped, bumped or otherwise moved in close proximity to said at least one NFC sensor; and
sending at least one reservation expiration notification to checked-in mobile wireless communications devices (34b) from the reservation server based upon a reserved ending time and a subsequent check-in of another mobile wireless communications device (34a), said check-in resulting from said another mobile wireless communications device (34a) being swiped, bumped or otherwise moved in close proximity to said at least one NFC sensor.

11. The method of claim 10 wherein sending comprises sending the at least one reservation expiration notification within a threshold period of the reserved ending time.

12. The method of claim 10 wherein sending comprises sending a plurality of reservation expiration notifications at an increasing frequency.

13. The method of claim 10 wherein scheduling comprises scheduling the reserved starting and ending times based upon NFC communication between respective mobile wireless communications devices (34a, 34b) and the at least one NFC sensor.

14. The method of claim 10 further comprising canceling reserved starting and ending times with the reservation server (32) based upon a failure of associated mobile wireless communications devices to check in (34a, 34b).

## Patentansprüche

1. Ein Konferenzraumreservierungssystem (30), umfassend:
mindestens einen Funkfrequenzerkennungs-(RFID; RFID = Radio Frequency Identification-)Sensor (31), der angrenzend an einen Konferenzraum (32) zu positionieren ist, wobei der mindestens eine RFID-Sensor (31) mindestens einen NFC-Sensor umfasst;
eine Vielzahl von mobilen drahtlosen Kommunikationsvorrichtungen (34a, 34b), die jeweils für die NFC-Kommunikation mit dem mindestens einen NFC-Sensor konfiguriert sind; und
einen Reservierungsserver (36), der dazu konfiguriert ist, reservierte Start- und Endzeiten für den Konferenzraum zu planen,
eingecheckte mobile drahtlose Kommunikationsvorrichtungen (34b) basierend auf einer NFC-Kommunikation mit dem mindestens einen NFC-Sensor zu verfolgen, die sich daraus ergibt, dass die mobilen drahtlosen Kommunikationsvorrichtungen (34b) in unmittelbarer Nähe des mindestens einen NFC-Sensors vorbeiziehen, anstoßen oder anderweitig bewegt werden, und
mindestens eine Reservierungsablaufbenachrichtigung an eingecheckte mobile drahtlose Kommunikationsvorrichtungen (34b) basierend auf einer reservierten Endzeit und einem anschließenden Einchecken einer anderen mobilen drahtlosen Kommunikationsvorrichtung (34a) zu senden, die sich daraus ergibt, dass die andere mobile drahtlose Kommunikationsvorrichtung (34a) in unmittelbarer Nähe des mindestens einen NFC-Sensors vorbeizieht, anstößt oder anderweitig bewegt wird.

2. Das Konferenzraumreservierungssystem (30) gemäß Anspruch 1, wobei der Reservierungsserver (36) dazu konfiguriert ist, die mindestens eine Reservierungsablaufbenachrichtigung innerhalb einer Schwellwertdauer der reservierten Endzeit zu senden.

3. Das Konferenzraumreservierungssystem (30) gemäß Anspruch 1, wobei der Reservierungsserver (36) dazu konfiguriert ist, eine Vielzahl von Reservierungsablaufbenachrichtigungen mit zunehmender Frequenz zu senden.

4. Das Konferenzraumreservierungssystem (30) gemäß Anspruch 1, wobei der Reservierungsserver (36) dazu konfiguriert ist, die reservierten Start- und Endzeiten über NFC-Kommunikation zwischen den mobilen drahtlosen Kommunikationsvorrichtungen (34a, 34b) und dem mindestens einen NFC-Sensor (31) zu planen.

5. Das Konferenzraumreservierungssystem (30) gemäß Anspruch 1, wobei der Reservierungsserver (36) ferner dazu konfiguriert ist, reservierte Start- und Endzeiten basierend auf einem Ausfall mindestens einer zugehörigen mobilen drahtlosen Kommunikationsvorrichtung (34a, 34b) zum Einchecken für reservierte Startzeiten zu löschen.

6. Das Konferenzraumreservierungssystem (30) gemäß Anspruch 1, wobei der Reservierungsserver (36) ferner dazu konfiguriert ist, eine Verfügbarkeitsbenachrichtigung basierend auf dem Auschecken der eingecheckten mobilen drahtlosen Kommunikationsvorrichtung (34b) zu senden.

7. Das Konferenzraumreservierungssystem (30') gemäß Anspruch 1, ferner umfassend ein Endgerät (38'), das in dem Konferenzraum (32') zu positionieren ist; und wobei der Reservierungsserver (36') ferner dazu konfiguriert ist, die mindestens eine Reservierungsablaufbenachrichtigung an das Endgerät zu senden.

8. Das Konferenzraumreservierungssystem (30') gemäß Anspruch 7, wobei das Endgerät (38') ein Display umfasst, und wobei das Display dazu konfiguriert ist, die mindestens eine Reservierungsablaufbenachrichtigung anzuzeigen.

9. Das Konferenzraumreservierungssystem (30') gemäß Anspruch 7, wobei das Endgerät (38') und der Reservierungsserver (36') über ein lokales Netzwerk LAN (37') kommunizieren.

10. Ein Verfahren zur Reservierung von Konferenzräumen, umfassend:
Planen reservierter Start- und Endzeiten für einen Konferenzraum (32) mit einem Reservierungsserver (36);
Verfolgen von eingecheckten mobilen drahtlosen Kommunikationsvorrichtungen (34b) mit dem Reservierungsserver basierend auf Nahfeldkommunikation (NFC; NFC = Near Field Communication) zwischen den mobilen drahtlosen Kommunikationsvorrichtungen und mindestens einem NFC-Sensor (31), der angrenzend an den Konferenzraum positioniert ist, wobei die Kommunikation daraus resultiert, dass die mobilen drahtlosen Kommunikationsvorrichtungen (34b) in unmittelbarer Nähe des mindestens einen NFC-Sensors vorbeiziehen, anstoßen oder anderweitig bewegt werden; und
Senden mindestens einer Reservierungsablaufbenachrichtigung an eingecheckte mobile drahtlose Kommunikationsvorrichtungen (34b) vom Reservierungsserver basierend auf einer reservierten Endzeit und einem anschließenden Einchecken einer anderen mobilen drahtlosen Kommunikationsvorrichtung (34a), wobei das Einchecken daraus resultiert, dass die andere mobile drahtlose Kommunikationsvorrichtung (34a) in unmittelbarer Nähe des mindestens einen NFC-Sensors vorbeizieht, anstößt oder anderweitig bewegt wird.

11. Das Verfahren gemäß Anspruch 10, wobei das Senden das Senden der mindestens einen Reservierungsablaufbenachrichtigung innerhalb einer Schwellenwertdauer der reservierten Endzeit umfasst.

12. Das Verfahren gemäß Anspruch 10, wobei das Senden das Senden einer Vielzahl von Reservierungsablaufbenachrichtigungen mit zunehmender Frequenz umfasst.

13. Das Verfahren gemäß Anspruch 10, wobei die Planung das Planen der reservierten Start- und Endzeiten basierend auf der NFC-Kommunikation zwischen jeweiligen mobilen drahtlosen Kommunikationsvorrichtungen (34a, 34b) und dem mindestens einen NFC-Sensor umfasst.

14. Das Verfahren gemäß Anspruch 10 ferner umfassend das Löschen reservierter Start- und Endzeiten mit dem Reservierungsserver (32) basierend auf einem Ausfall der zugehörigen mobilen drahtlosen Kommunikationsvorrichtungen zum Einchecken (34a, 34b).

## Revendications

1. Système de réservation de salle de réunion (30) comprenant :
au moins un capteur d'identification par radiofréquence, RFID (*radio frequency identification*) (31), à positionner au voisinage d'une salle de réunion (32), où ledit au moins un capteur RFID (31) comprend au moins un capteur CCP ;
une pluralité de dispositifs mobiles de communication sans fil (34a, 34b), configurés chacun pour une communication CCP avec ledit au moins un capteur CCP ; et
un serveur de réservation (36) configuré pour :
programmer des heures de début et de fin réservées pour la salle de réunion,
suivre des dispositifs mobiles de communication sans fil dont l'arrivée est enregistrée (34b) sur la base de la communication CCP avec ledit au moins un capteur CCP résultant du glissement, de l'entrée en contact ou d'un autre mouvement desdits dispositifs mobiles de communication sans fil (34b) à proximité étroite dudit au moins un capteur CCP, et
envoyer au moins une notification d'expiration de réservation aux dispositifs mobiles de communication sans fil dont l'arrivée est enregistrée (34b) sur la base d'une heure de fin réservée et d'un enregistrement ultérieur de l'arrivée d'un autre dispositif mobile de communication sans fil (34a) résultant du glissement, de l'entrée en contact ou d'un autre mouvement dudit autre dispositif mobile de communication sans fil (34a) à proximité étroite dudit au moins un capteur CCP.

2. Système de réservation de salle de réunion (30) selon la revendication 1, dans lequel ledit serveur de réservation (36) est configuré pour envoyer l'au moins une notification d'expiration de réservation au cours d'une période de seuil avant l'heure de fin réservée.

3. Système de réservation de salle de réunion (30) selon la revendication 1, dans lequel ledit serveur de réservation (36) est configuré pour envoyer une pluralité de notifications d'expiration de réservation à une fréquence croissante.

4. Système de réservation de salle de réunion (30) selon la revendication 1, dans lequel ledit serveur de réservation (36) est configuré pour programmer les heures de début et de fin réservées par le biais d'une communication CCP entre lesdits dispositifs mobiles de communication sans fil (34a, 34b) et ledit au moins un capteur CCP (31).

5. Système de réservation de salle de réunion (30) selon la revendication 1, dans lequel ledit serveur de réservation (36) est configuré en outre pour annuler des heures de début et de fin réservées, sur la base d'un défaut d'enregistrement d'arrivée, pour des heures de début réservées, d'au moins un dispositif mobile de communication sans fil associé (34a, 34b).

6. Système de réservation de salle de réunion (30) selon la revendication 1, dans lequel ledit serveur de réservation (36) est configuré en outre pour envoyer une notification de disponibilité sur la base de l'enregistrement du départ du dispositif mobile de communication sans fil dont l'arrivée est enregistrée (34b) .

7. Système de réservation de salle de réunion (30') selon la revendication 1, comprenant en outre un terminal (38') à positionner dans la salle de réunion (32') ; et dans lequel ledit serveur de réservation (36') est configuré en outre pour envoyer l'au moins une notification d'expiration de réservation audit terminal.

8. Système de réservation de salle de réunion (30') selon la revendication 7, dans lequel ledit terminal (38') comprend un dispositif d'affichage, et dans lequel ledit dispositif d'affichage est configuré pour afficher l'au moins une notification d'expiration de réservation.

9. Système de réservation de salle de réunion (30') selon la revendication 7, dans lequel ledit terminal (38') et ledit serveur de réservation (36') communiquent par le biais d'un réseau local LAN (*local area network*) (37').

10. Procédé de réservation de salle de réunion comprenant les étapes consistant à :
programmer des heures de début et de fin réservées pour une salle de réunion (32) avec un serveur de réservation (36) ;
suivre des dispositifs mobiles de communication sans fil dont l'arrivée est enregistrée (34b) avec le serveur de réservation, sur la base d'une communication en champ proche (CCP) entre les dispositifs mobiles de communication sans fil et au moins un capteur CCP (31) positionné au voisinage de la salle de réunion, ladite communication résultant du glissement, de l'entrée en contact ou d'un autre mouvement desdits dispositifs mobiles de communication sans fil (34b) à proximité étroite dudit au moins un capteur CCP; et
envoyer au moins une notification d'expiration de réservation aux dispositifs mobiles de communication sans fil dont l'arrivée est enregistrée (34b), à partir du serveur de réservation, sur la base d'une heure de fin réservée et d'un enregistrement ultérieur de l'arrivée d'un autre dispositif mobile de communication sans fil (34a), ledit enregistrement d'arrivée résultant du glissement, de l'entrée en contact ou d'un autre mouvement dudit autre dispositif mobile de communication sans fil (34a) à proximité étroite dudit au moins un capteur CCP.

11. Procédé selon la revendication 10, dans lequel l'envoi comprend l'envoi de l'au moins une notification d'expiration de réservation au cours d'une période de seuil avant l'heure de fin réservée.

12. Procédé selon la revendication 10, dans lequel l'envoi comprend l'envoi d'une pluralité de notifications d'expiration de réservation à une fréquence croissante.

13. Procédé selon la revendication 10, dans lequel la programmation comprend la programmation des heures de début et de fin réservées, sur la base d'une communication CCP entre les dispositifs mobiles de communication sans fil respectifs (34a, 34b) et l'au moins un capteur CCP.

14. Procédé selon la revendication 10, comprenant en outre l'annulation d'heures de début et de fin réservées, avec le serveur de réservation (32) sur la base d'un défaut d'enregistrement d'arrivée de dispositifs mobiles de communication sans fil associés (34a, 34b).
